# FASCICULE DE BREVET EUROPEEN

(11) **EP 2 999 919 B1**
(45) Date de publication et mention de la délivrance du brevet: **09.05.2018**
(21) Numéro de dépôt: 14726133.3
(22) Date de dépôt: 21.05.2014
(51) Int. Cl.: F21V 8/00, F21S 8/10

(54) **GUIDE OPTIQUE A MOTIF REFLECHISSANT POUR LA PROPAGATION D'UN FAISCEAU LUMINEUX**
OPTISCHER WELLENLEITER MIT EINEM REFLEKTIERENDEN MUSTER ZUR VERBREITUNG EINES LICHTSTRAHLS
OPTICAL WAVEGUIDE WITH A REFLECTIVE PATTERN FOR PROPAGATING A LIGHT BEAM

(30) Priorité: 22.05.2013 FR 1354570
(43) Date de publication de la demande: 30.03.2016
(73) Titulaire: Valeo Vision, 93012 Bobigny Cedex (FR)
(72) Inventeur: GERMON, François, F-49320 Vauchrétien (FR); DOHA, Jean-François, F-49124 Saint Barthélémy d'Anjou (FR); SAGNA, Boubacar, F-78500 Sartrouville (FR)
(86) Numéro de dépôt international: PCT/EP2014/060479
(87) Numéro de publication internationale: WO 2014/187876

(56) Documents cités:
- EP-A2- 2 476 947
- WO-A1-00/50807
- DE-A1-102008 034 052
- FR-A1- 2 936 295

## Description

La présente invention concerne un guide optique et son utilisation dans un dispositif lumineux équipant un véhicule à moteur, en particulier un véhicule automobile.

Dans le domaine de l'éclairage et de la signalisation de véhicules automobiles, il est de plus en plus fréquent d'utiliser des guides optiques. En effet, ceux-ci présentent l'avantage de pouvoir prendre des formes géométriques très variées et d'amener une surface éclairante même dans des zones peu accessibles du dispositif d'éclairage et/ou de signalisation. Ceci est particulièrement intéressant dans le contexte actuel où les créateurs automobiles cherchent à donner à leurs véhicules une signature qui leur est propre, notamment en proposant des formes complexes des projecteurs, encore appelés phares.

Par guide optique, on vise dans la présente demande une pièce transparente ou translucide à l'intérieur de laquelle des rayons lumineux se propagent de manière contrôlée depuis une des extrémités du guide, appelée face d'entrée, jusqu'à au moins une face de sortie. La propagation de la lumière de manière contrôlée s'effectue généralement par des réflexions totales successives sur diverses faces de réflexion internes au guide optique.

Concrètement, au moins une source lumineuse est disposée à proximité de la face d'entrée, par exemple une diode électroluminescente. Les rayons lumineux émis par cette source vont se propager dans le guide optique vers la face opposée à la face d'entrée appelée face terminale, par l'intermédiaire de faces de réflexion interne parallèles, situées entre la face d'entrée et la face terminale.

Dans certains guides optiques, les rayons lumineux peuvent être renvoyés en direction d'une face de sortie secondaire différente de la face terminale, de telle manière qu'un observateur a alors l'impression que cette face de sortie secondaire est éclairée directement par une source lumineuse. Selon certains modes de réalisation, par exemple comme cela est décrit dans la demande FR 2 891 891, cette face de sortie est notamment une des faces de réflexion interne. Dans ce but, on modifie la forme d'une première face de réflexion interne pour qu'elle ne soit plus parallèle à la deuxième face de réflexion interne, de telle sorte que les rayons incidents rencontrant la première face au niveau de cette cassure soient renvoyés sur cette seconde face de réflexion interne avec un angle d'incidence tel qu'au lieu de se réfléchir sur cette seconde face de réflexion interne les rayons la traversent et sortent du guide. Ces modifications de la forme de la première face de réflexion interne peuvent être obtenues par la réalisation de prismes, comme cela est décrit dans la demande FR 2 891 891. On a observé que de tels guides optiques comportant des prismes permettent d'obtenir l'émission d'une lumière anisotrope orientée dans l'axe du véhicule. Si une telle conception est avantageuse en ce qu'elle permet de répondre aux normes photométriques, les créateurs automobiles souhaitent également proposer des dispositifs d'éclairage et/ou de signalisation agréables visuellement, notamment par un aspect allumé homogène quelle que soit la position dans laquelle un observateur regarde le véhicule, aussi bien dans l'axe longitudinal du véhicule que sur le côté.

On connait par ailleurs la demande de brevet publiée sous le numéro WO 00/50807 qui divulgue des panneaux lumineux comportant un guide optique se présentant sous la forme d'un panneau et qui comporte sur une de ses faces une distribution de motifs (en creux ou en relief) venus de matière avec ladite face. Les différentes formes de réalisation des motifs proposées dans ce document assurent un éclairage anisotrope et certaines d'entre elles un éclairage qui est également homogène. Toutefois, si les solutions décrites sont particulièrement adaptées pour réaliser des appareils pour la photothérapie ou du rétroéclairage pour un écran d'affichage, elles ne sauraient convenir à la réalisation de guides optiques galbés pour dispositifs d'éclairage et/ou de signalisation automobile, guides qui sont en outre inclinés par rapport au plan frontal perpendiculaire à l'axe optique du dispositif, c'est-à-dire à un plan vertical, l'axe optique étant sensiblement parallèle à l'horizontale, et qui répondraient de surcroit aux normes photométriques obligatoires.

Dans ce contexte, l'invention propose une alternative aux dispositifs lumineux de véhicules dans laquelle un guide optique permet un éclairage à la fois homogène et anisotrope, et qui permette de concevoir des dispositifs galbés et inclinés par rapport au plan frontal à l'axe optique desdits dispositifs. Il convient que cette alternative soit par ailleurs facile à réaliser et peu coûteuse.

L'invention vise un guide optique de propagation d'un faisceau lumineux adapté à cheminer par réflexions totales successives sur les faces de ce guide jusqu'à une face de sortie où le faisceau est réfracté, dans lequel une des faces forme, en regard de la face de sortie, une face de support d'un motif s'étendant en travers de la direction principale du faisceau pour dévier celui-ci vers la face de sortie. Selon une caractéristique de l'invention, le motif est un motif réfléchissant bifonctionnel venu de matière avec la face de support et combinant les moyens de mise en oeuvre d'une réflexion ciblée du faisceau vers la face de sortie et les moyens de mise en oeuvre d'une réflexion multidirectionnelle de ce même faisceau.

Ainsi on combine en un motif venu de matière avec l'une des faces du guide optique deux effets distincts. On permet un éclairage performant dans l'axe du véhicule afin de répondre aux normes de photométrie, en concentrant le faisceau sur un point donné, et on permet simultanément une diffusion de la lumière dans toutes les directions pour que l'aspect général de l'éclairage soit cohérent et homogène, que l'on regarde le véhicule de face ou sur le côté.

Par venu de matière, on entend dans la présente demande que les motifs sont directement ménagés dans le guide, dans la masse, ou issus de celui-ci, par distinction avec des motifs rapportés sur ledit guide, par exemple au moyen d'un film adhésif revêtu desdits motifs.

Dans un mode de réalisation particulièrement avantageux de l'invention, le motif réfléchissant bifonctionnel présente trois parties successives parmi lesquelles des parties d'extrémités formées par des portions de cône entre lesquelles est interposée une partie intermédiaire à faces planes ou courbées. On réalise la double fonction de réflexion en alliant deux géométries aux intérêts optiques différents. La partie intermédiaire permet de concentrer le faisceau lumineux sur une zone précise de la face de sortie tandis que les portions de cône assurent la réflexion multidirectionnelle.

Selon une caractéristique d'un premier mode de réalisation de l'invention, la partie intermédiaire comporte deux facettes, planes et non parallèles, qui se rejoignent en une arête de sommet, de manière à présenter une section triangulaire. Ces facettes sont symétriques l'une de l'autre par rapport au plan perpendiculaire à la face de support des motifs et passant par l'arête de sommet. Cette symétrie est notamment intéressante pour le procédé de fabrication de l'invention. Selon une caractéristique d'une deuxième mode de réalisation de l'invention, la partie intermédiaire comporte deux facettes courbées dissymétriques, qui se rejoignent en une arête de sommet courbée. Selon une caractéristique de l'invention, ces facettes sont inclinées par rapport au plan horizontal dans deux directions. D'une part elles sont inclinées par rotation d'un angle déterminé autour d'un axe parallèle à la face de support et d'autre part, elles sont inclinées par rotation d'un angle déterminé autour d'un axe perpendiculaire à cette face de support. Selon les angles d'inclinaison calculés, l'arête de sommet de la partie intermédiaire n'est alors pas parallèle à la face de support des motifs. Ainsi, les facettes présentent une pente adaptée à réfléchir les rayons pour qu'ils puissent rencontrer la face de sortie d'une part avec la composante verticale souhaitée, et d'autre part avec la composante transversale souhaitée, ceci afin d'être réfractés et dirigés en sortie du guide optique dans la direction optique souhaitée. Il convient de noter que l'orientation de l'arête de sommet sera particulièrement considérée pour le procédé de fabrication de l'invention.

Dans un agencement particulier de l'invention, la face de support comporte une pluralité de motifs bifonctionnels placés les uns à côte des autres en formant une ligne selon une direction transversale à la direction principale de déplacement du faisceau lumineux dans le guide. Dans le cas où la face de support comporterait plusieurs lignes de motifs, il est intéressant que l'ensemble des motifs soit en outre disposé en quinconce.

On pourra également prévoir que la face de support comporte en outre des motifs aux formes différentes de celles des motifs bifonctionnels évoqués précédemment, et par exemple des motifs prenant la forme de cônes dont l'axe est normal à la face de support des motifs.

Selon des caractéristiques d'un mode de réalisation préféré de l'invention, le guide optique est formé par une nappe en matériau transparent qui présente une forme de parallélépipède comportant notamment deux faces principales sensiblement parallèles entre elles et qui forment l'une ladite face de sortie et l'autre ladite face de support, ainsi qu'un bord proximal adapté à recevoir une source de lumière, de type diodes électroluminescentes, qui envoie de la lumière dans l'épaisseur du guide optique, et un bord distal, qui constitue l'extrémité opposée au bord proximal et qui présente un revêtement ou un profil géométrique spécifique permettant de renvoyer le faisceau lumineux dans le guide optique.

La présence de ce revêtement a un impact significatif sur l'aspect allumé du guide : il permet d'une part de récupérer la lumière tendant à s'échapper du guide par le bord distal, et il permet en outre de renvoyer les rayons lumineux avec un angle d'incidence élevé, ce qui va favoriser la sortie du rayon lumineux selon une direction souhaitée, tel que cela sera décrit ci-après.

L'invention concerne également un dispositif lumineux de véhicule, comportant une glace de fermeture et une source de lumière, ainsi qu'un guide optique de propagation d'un faisceau lumineux. Une face de sortie du guide optique, lisse et continue, est disposée en regard de la glace de fermeture, tandis qu'une face parallèle comporte des motifs réfléchissants bifonctionnels formant une cassure sur le profil régulier de la face de support, ces motifs présentant trois parties parmi lesquelles des parties d'extrémités formées par des portions de cône entre lesquelles est interposée une partie intermédiaire à faces planes.

Ce dispositif lumineux de véhicule peut être:
- un dispositif d'éclairage de la route, encore appelé dispositif d'éclairage (l'emploi des termes « dispositif d'éclairage » sans d'autres précisions, vise un dispositif d'éclairage de la route); par exemple un projecteur avant de véhicule encore appelé phare,
- un dispositif de signalisation, par exemple un indicateur de direction, ou un feu arrière de position, ou bien encore un feu de signalisation diurne, encore appelé DRL (pour « Day Running Light »),
- un dispositif d'éclairage intérieur, à savoir un dispositif à l'intérieur de l'habitacle du véhicule pour éclairer celui-ci ou pour réaliser une illumination d'ambiance.

Selon une caractéristique de l'invention, la glace de fermeture présente un galbe dans la direction transversale que le guide optique suit. La face de support du guide présente au moins une ligne de motifs bifonctionnels et l'inclinaison de la partie intermédiaire des motifs varie d'un motif à l'autre le long d'une même ligne.

On décrira enfin un procédé de fabrication d'un guide optique de propagation de faisceau lumineux comportant des motifs réfléchissants bifonctionnels venus de matière avec l'une des faces du guide optique. Dans un premier temps, on déforme une plaque plane pour obtenir des reliefs correspondants aux formes des motifs bifonctionnels et à leur agencement souhaité en lignes et en quinconce. Cette déformation est effectuée au moyen d'un unique outil, en forme de cône. On enfonce l'outil dans la plaque pour former une empreinte conique, puis on déplace l'outil selon une directrice de direction donnée, la directrice pouvant être courbe ou rectiligne. On place ensuite la plaque ainsi obtenue dans le moule, par exemple en orientant les reliefs vers l'intérieur du moule, et on injecte le matériau. Le guide est alors formé par ce matériau injecté. Ainsi, avantageusement avec peut d'outillage, on réalise les motifs complexes venus de matière avec la face de support. Le même outillage peut être utilisé pour réaliser des motifs aux pentes différentes, par le calcul préalable de la directrice que doit suivre l'outil en forme de cône. Avantageusement, ce procédé est utilisé pour former un guide selon la présente invention.

L'invention sera maintenant plus complètement décrite dans le cadre de caractéristiques préférées et de leurs avantages, en faisant référence aux figures 1 à 8 dans lesquelles :
- la figure 1 représente de façon schématique un projecteur de véhicule dont on voit une glace sur laquelle des lignes lumineuses espacées de quelques millimètres sont projetées, un ensemble de diodes électroluminescentes étant disposé dans le projecteur,
- la figure 2 illustre en perspective un mode de réalisation d'un guide optique adapté à être logé dans le projecteur, les flèches représentant le trajet d'un rayon lumineux issu d'une source lumineuse disposée en extrémité du guide et réfracté hors du guide par sa face de sortie pour être projeté sur la glace de fermeture,
- la figure 3 est une vue en coupe dans un plan vertical et longitudinal d'une section frontale du guide optique, illustrant partiellement le chemin dans le plan correspondant du rayon lumineux canalisé dans le guide,
- la figure 4 est une vue en coupe dans un plan transversal et longitudinal d'une section frontale du guide optique, illustrant partiellement le chemin dans le plan correspondant du rayon lumineux canalisé dans le guide,
- la figure 5 est une vue en coupe semblable à celle de la figure 4, pour une section latérale du guide optique,
- les figures 6 et 7 illustrent, en vue en perspective et en vue de côté, un motif réfléchissant selon l'invention, qui comporte deux portions de cône entre lesquelles est interposée une partie intermédiaire,
- la figure 8 illustre une surface de guide optique sur laquelle sont disposées en saillie plusieurs lignes de motifs réfléchissants selon la figure 6,
- et la figure 9 illustre, dans une vue similaire à celle de la figure 6, un motif réfléchissant selon un deuxième mode de réalisation de l'invention.

Dans ce qui suit, on désignera par direction longitudinale L la direction dans le sens de circulation du véhicule automobile, et par direction transversale T une direction horizontale et perpendiculaire à cette direction longitudinale. La direction verticale V désignera la direction perpendiculaire aux deux précédentes, qui définissent par ailleurs un plan horizontal. Le trièdre L,V,T est placé sur certaines figures pour faciliter la lecture.

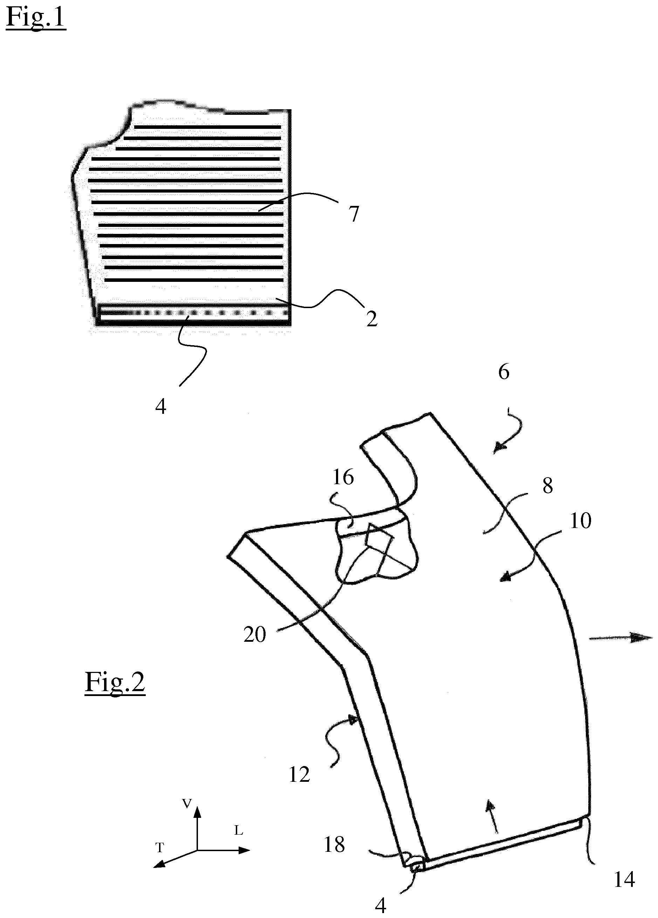

Un dispositif d'éclairage et de signalisation est représenté sur la figure 1. Il s'agit ici d'un projecteur de véhicule qui comporte une glace de fermeture 2 et qui comporte également une source lumineuse 4.

La source lumineuse émet un faisceau lumineux à l'intérieur du projecteur et un guide optique 6 est disposé à l'intérieur de ce projecteur pour recevoir et propager ce faisceau lumineux jusqu'à une face de sortie du guide 8 située en regard de la glace de fermeture. Le guide optique est conformé dans le but de suivre la forme de cette glace.

La figure 2 montre une vue en perspective et en coupe d'une nappe formant un guide optique destiné à propager un faisceau lumineux émis par la source lumineuse 4 depuis une extrémité proche de la source lumineuse jusqu'à une extrémité opposée.

La source lumineuse peut consister en une série de diodes électroluminescentes qui envoient de la lumière dans l'épaisseur du guide optique, où elle se trouve piégée grâce à la réflexion totale interne entre les faces de la nappe constituant le guide optique.

La nappe présente une forme de parallélépipède, sensiblement plan ou courbé. Les faces de cette nappe forment chacune un dioptre séparant l'air de l'intérieur de la nappe réalisée en un matériau transparent. On distingue notamment deux faces principales 10 et 12 sensiblement parallèles entre elles ainsi qu'un bord proximal 14 au regard duquel est disposée la source lumineuse, et un bord distal 16, qui constitue le bord opposé au bord proximal, et qui est ici dépourvu de source lumineuse. On pourrait prévoir en variante une seconde source lumineuse au niveau du bord distal.

Le bord proximal présente des cavités 18 adaptées à recevoir chacune une tête de diode de la source lumineuse, de manière à exploiter au maximum le flux lumineux émis par les diodes. On comprend que les cavités de réception peuvent prendre des formes et un nombre différents selon les modes de réalisation. On pourra prévoir une pluralité de ces cavités, chacune étant destinée à loger une diode, ou ne prévoir qu'une cavité continue, par exemple ayant la forme d'une portion de cylindre, pour accueillir plusieurs diodes alignées. Les dimensions et les formes respectives des cavités et des têtes de diode sont de préférence complémentaires, avec suffisamment de jeu pour que les diodes puissent être facilement logées dans les cavités.

Les rayons lumineux émis depuis la source lumineuse disposée sur le bord proximal se dirigent vers le bord distal. Celui-ci présente un revêtement ou un profil géométrique spécifique permettant de renvoyer les rayons lumineux 20 dans le guide optique en direction du bord proximal tel que cela est visible sur la figure 2 dans la partie échancrée.

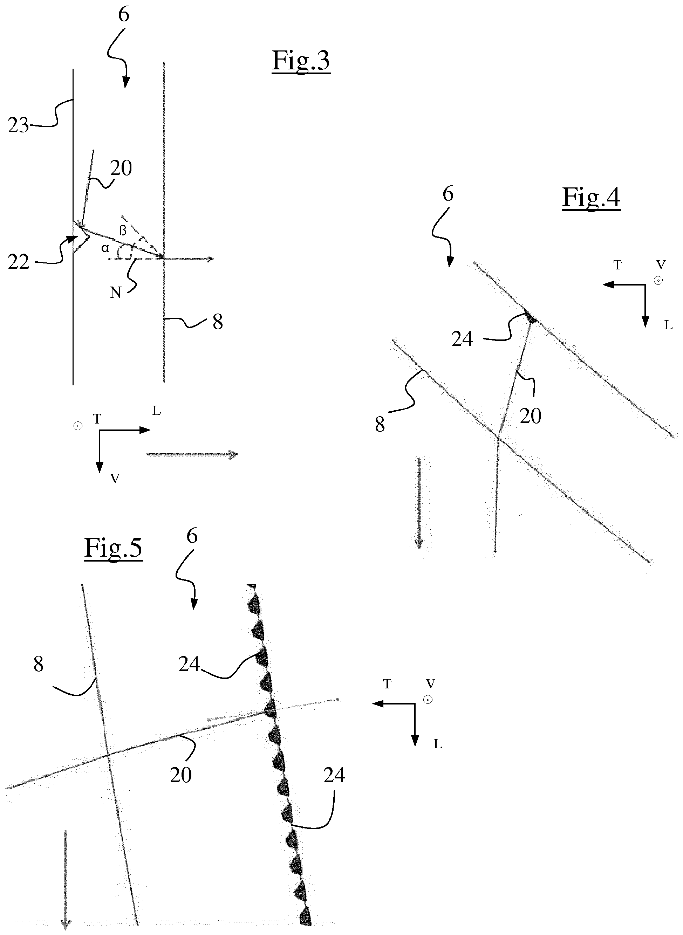

La figure 3 représente en coupe le guide optique dans un plan vertical et longitudinal de manière à illustrer sous quelle condition le rayon émis par la source lumineuse est conduit dans le guide optique. De manière générale, le rayon chemine dans l'épaisseur de la nappe par réflexions totales successives sur les faces principales de la nappe, entre les bords proximal et distal. Ces réflexions totales sont interrompues lorsque le rayon rencontre des motifs 22 disposés en saillie de l'une des faces de la nappe. On comprend sur cette figure 3 que la nappe forme un guide de lumière dans lequel les rayons lumineux admis sont canalisés. A cet effet, la nappe formant le guide optique est constituée d'une matière transparente qui a un indice de réfraction plus élevé que l'indice de réfraction du milieu, par exemple l'air, dans lequel est immergée la nappe. On prévoit ici de réaliser le guide optique à base de polymère transparent en polycarbonate, de préférence de qualité cristal. Dans un tel agencement où l'on connaît les indices de réfraction des milieux traversés par les rayons, on peut déterminer par le calcul un angle de seuil déterminé β par rapport à la normale au point d'incidence, auquel on se réfère pour déterminer si le rayon incident arrivant sur la face de guide va être réfléchi en totalité ou être en partie réfractée.

Chaque rayon lumineux 20 atteint une face de la nappe transparente avec un angle α par rapport à la normale au point d'incidence N. Lorsque l'angle α est inférieur à l'angle de seuil déterminé β, le rayon lumineux est réfracté hors du guide optique. Et lorsque l'angle α est supérieur à cet angle de seuil déterminé β, le rayon lumineux est réfléchi totalement à l'intérieur du guide optique, et il se propage donc dans le guide optique par réflexions totales successives sur les faces de la nappe.

Selon l'invention, le guide optique est conformé pour que le faisceau lumineux sortant par la face de sortie 8 produise des lignes horizontales 7 sur la glace de fermeture telles qu'elles sont visibles sur la figure 1.

La face de sortie est formée par l'une des faces principales de la nappe. Cette première face est disposée en regard de la glace de fermeture du projecteur. Elle est lisse et continue. La deuxième face s'étend parallèlement à la première face et elle se distingue de celle-ci en étant une face de support 23 d'éléments réfléchissants formant une cassure sur son profil régulier. Les éléments réfléchissants sont des motifs, en saillie de la deuxième face, qui se comportent comme une source optique secondaire en constituant des faces de réflexion internes autres que celles du guide, sur lesquelles un rayon lumineux incident est susceptible de se réfléchir.

Les rayons lumineux incidents qui rencontrent les motifs ainsi formés sont renvoyés vers la première face qu'ils atteignent sous un angle α inférieur à l'angle de seuil β. Ces rayons sont ainsi réfractés par la face de sortie formée par la première face et ils sont dirigés vers la glace de fermeture du projecteur, dans le plan d'incidence défini par le rayon incident et par la normale au point d'incidence.

Les motifs formés sur le guide optique comportent au moins un motif réfléchissant bifonctionnel 24, qui présente des parties d'extrémité coniques 26 entre lesquelles est interposée une partie intermédiaire 28 à faces planes.

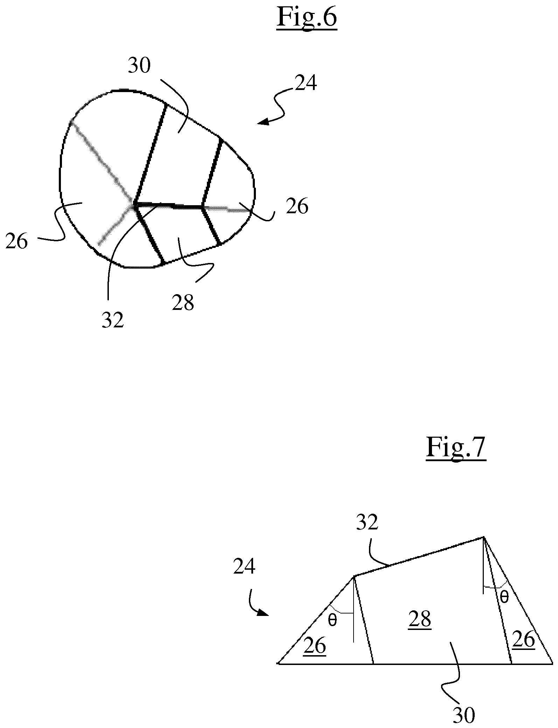

Dans un premier mode de réalisation, illustré sur les figures 6 et 7, la partie intermédiaire comporte deux facettes 30, planes et non parallèles qui se rejoignent en une arête de sommet 32 de telle manière qu'elle présente dans le plan vertical perpendiculaire à la deuxième face une section triangulaire isocèle, les facettes étant ici symétriques par rapport au plan perpendiculaire à la deuxième face et passant par l'arête de sommet.

On détermine la dimension des facettes en fonction de la dimension du guide optique et du calibrage du faisceau lumineux circulant dans le guide. A titre d'exemple, ils présentent une profondeur d'environ 0.25mm et une largeur d'environ 1mm. Ces motifs présentent avantageusement les mêmes dimensions, notamment en vue d'une simplification des outils de fabrication.

Les facettes de la partie intermédiaire ont une pente calculée pour pouvoir réfléchir les rayons incidents dans dune direction privilégiée. Cette pente est notamment visible sur les figures 6 et 7. La directivité du flux lumineux émis par les diodes électroluminescentes permet de calculer le chemin d'un nombre principal de rayons, représentés sur la figure par le rayon lumineux 20 et de connaître ainsi l'angle d'incidence du rayon lorsqu'il rencontre l'un des motifs réfléchissants bifonctionnels. Dans ce contexte, on calcule l'inclinaison de la partie intermédiaire nécessaire pour que le rayon réfléchi sur cette partie intermédiaire arrive sur la face de sortie du guide optique sous l'angle nécessaire pour que le rayon réfracté sorte du projecteur convenablement, c'est à dire dans l'axe optique et sensiblement horizontalement pour le cas illustré sur les figures 3 et 4.

Les facettes sont d'une part inclinées par rapport au plan horizontal d'un angle déterminé par calcul autour d'un axe parallèle à la face de support des motifs.

Cette inclinaison, visible sur la figure 3, permet d'envoyer le rayon lumineux rasant cette face de support en direction de la face de sortie. Le degré d'inclinaison de la facette est calculé pour que le rayon réfléchi rencontre la face de sortie et sous l'angle d'incidence adéquat pour la bonne réfraction du rayon lumineux par le dioptre formé par la face de sortie du guide. Dans le plan de la figure 3, on connaît l'angle d'incidence du rayon rasant par rapport à la verticale avant sa rencontre avec la facette du motif et on connaît l'angle par rapport à l'horizontale que l'on souhaite donner au rayon réfracté par la face de sortie, de telle sorte qu'une loi de calcul permet de déterminer, en fonction des indices de réfraction de l'air et du matériau du guide optique, la pente à donner dans ce plan à la facette du motif.

D'autre part, les facettes sont également inclinées par rapport au plan horizontal par rotation autour d'un axe normal à la face de support des motifs.

L'angle de rotation est déterminé par calcul pour que l'inclinaison dans ce plan, tel que cela se lit sur la figure 4, permette de réfléchir le rayon rasant, dirigé perpendiculairement au plan de la figure 4, avec une composante transversale par rapport à la normale à la face de support. Ceci dirige le rayon réfléchi vers le point d'incidence adéquat sur la face de sortie, de manière à ce que le rayon réfracté soit dirigé dans l'axe optique.

On comprend ainsi que des motifs disposés sur la première face de support lorsque celle-ci est uniquement frontale, c'est à dire perpendiculaire à la direction de circulation du véhicule, n'ont pas à être inclinés par rapport au plan horizontal et autour d'un axe normal à la face de support des motifs, le plan d'incidence dans lequel les rayons se réfléchissent et réfractent naturellement étant parallèle à l'axe optique.

Les parties coniques sont disposées de part et d'autre de la partie intermédiaire afin de réfléchir les rayons de lumière dans toutes les directions et d'assurer une fonction de rayonnement que ne remplit pas la partie intermédiaire. Ces parties coniques sont formées par des portions de cône dont la base est confondue avec la face de support du guide et dont le sommet est formé par l'extrémité correspondante de l'arête de la partie intermédiaire. Les deux portions de cône disposées de part et d'autre de la partie intermédiaire ont le même angle au sommet θ (tel qu'illustré sur la figure 7), ce qui autorise tel que cela sera décrit ci-après l'utilisation d'un même outil conique pour le procédé de fabrication du guide optique. On observe que, du fait des deux composantes d'inclinaison des facettes, l'arête de sommet 32 n'est pas parallèle à la face du guide servant de support aux motifs. Les portions de cône présentent donc des diamètres différents. On comprend que, si les calculs d'inclinaison de la partie intermédiaire amenaient à concevoir cette partie avec une arête de sommet parallèle à la face de support, et ce notamment dans le cas où le guide est plan et s'étend perpendiculairement à l'axe optique, on pourrait disposer de part et d'autre de la partie intermédiaire des portions de cônes complémentaires, aux dimensions équivalentes.

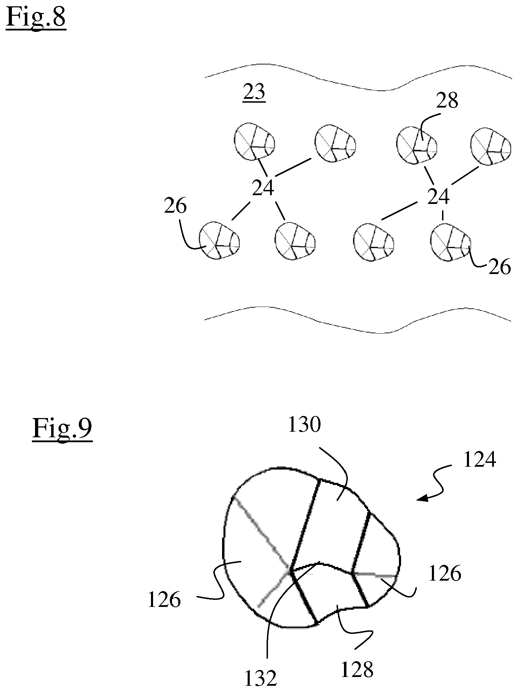

Dans un deuxième mode de réalisation, illustré sur la figure 9, pour la description duquel on a conservé pour les éléments équivalents les mêmes références auxquelles on a ajouté 100, le motif réfléchissant bifonctionnel 124 présente des parties d'extrémité coniques 126 entre lesquelles est interposée une partie intermédiaire 128, qui comporte deux facettes courbées 130 se rejoignant en une arête de sommet 132. Les facettes courbées sont dissymétriques et l'arête de sommet qui les relient à leur extrémité opposée à la face de support des motifs présente un profil courbé également.

Dans ces deux modes de réalisation précédemment décrits, on prévoit, tel que cela est illustré sur la figure 7, de placer les motifs réfléchissants bifonctionnels les uns à côté des autres, en formant une ligne qui s'étend le long de l'axe transversal. On forme sur la face de support des motifs du guide optique autant de lignes de motifs bifonctionnels que l'on souhaite obtenir de lignes horizontales lumineuses en sortie du projecteur.

Lorsque plusieurs lignes de motifs bifonctionels sont prévues, on réalise avantageusement un agencement de ces lignes sur la face de support de telle sorte que les motifs sont disposés en quinconce. Ainsi, on comprend qu'un rayon rasant peut passer entre deux motifs d'une même ligne sans être réfléchi pour venir impacter un motif de la ligne suivante.

Tel que cela est illustré sur les figures 4 et 5, le projecteur peut être galbé et il peut présenter une partie frontale et une partie latérale. La nappe formant le guide optique suit alors cette courbure pour que la face de sortie du guide soit de façon continue située en regard de la glace de fermeture. On calcule l'orientation des facettes de la partie intermédiaire des motifs pour que progressivement la lumière soit dirigée dans une autre direction que l'axe optique longitudinal mais toujours dans la continuité horizontale de la ligne lumineuse afin de garder une continuité d'aspect allumé quand on tourne autour du véhicule.

On va maintenant décrire le procédé de fabrication du guide optique tel qu'il vient d'être décrit, avec des motifs venus de matière avec l'une des faces du guide optique. Les motifs peuvent être obtenus directement lors du moulage du guide optique, en munissant le moule de reliefs appropriés, le terme relief étant ici employé dans un sens générique et pouvant désigner une formation en bosse ou en creux.

On usine dans un premier temps une plaque plane pour qu'elle comporte en sortie d'usinage des reliefs correspondants aux formes des motifs bifonctionnels et à leur agencement en ligne et en quinconce. L'usinage se fait avantageusement avec un seul outil, en forme de cône. On déforme la plaque par insertion de l'outil de sorte que l'on forme une première partie conique puis on déplace l'outil selon une directrice de même direction que celle de l'arête de la partie intermédiaire du motif. Si le sommet est prévu parallèle à la face de support des motifs, on déplace l'outil latéralement sans variation de profondeur, tandis que s'il est prévu que le motif présente un sommet à pente, on fait varier la profondeur d'enfoncement de l'outil lors de son déplacement latéral. De même, si on souhaite obtenir des motifs selon le premier mode de réalisation, avec une partie intermédiaire à faces planes, on déplace latéralement l'outil en ligne droite, tandis qu'on le déplace latéralement selon une directrice courbe si l'on souhaite obtenir des motifs selon le deuxième mode de réalisation, avec une partie intermédiaire à faces courbées.

Le déplacement latéral de l'outil génère la partie intermédiaire, avec deux facettes réalisées de part et d'autre du plan perpendiculaire à la plaque. Lorsque l'outil est arrêté, sa forme conique génère instantanément la deuxième partie conique.

Puis on place la plaque dans le moule en orientant les reliefs vers l'intérieur du moule et on injecte le matériau. De la sorte, les motifs réalisés en négatif sur la plaque vont être formés en positif, c'est à dire en bossage sur la pièce injectée. On aura prévu par calcul un angle au sommet de la partie intermédiaire suffisamment ouvert pour le démoulage.

La description qui précède explique clairement comment l'invention permet d'atteindre les objectifs qu'elle s'est fixés et notamment de proposer un dispositif lumineux de véhicule qui soit particulièrement efficace. En alliant deux géométries aux intérêts optiques différents, c'est à dire en combinant les formes prismatiques et coniques sur un même motif, on permet un éclairage performant dans l'axe du véhicule afin de répondre aux normes de photométrie, en calculant l'inclinaison des surfaces prismatiques pour envoyer la lumière dans la direction souhaitée contre la face opposée du guide pour qu'elle puisse après réfraction sortir du projecteur dans l'axe du véhicule, et selon des lignes parallèles espacées de quelques millimètres. On permet simultanément une diffusion de la lumière dans toutes les directions lorsque le faisceau rencontre la zone conique, de telle sorte que l'aspect général est cohérent et homogène, que l'on regarde le véhicule de face ou sur le côté.

On pourra également mettre en pratique le guide optique selon l'invention dans un mode de réalisation particulier, non représenté, d'un dispositif d'éclairage de véhicule. Le projecteur présente une forme symétrique par rapport à un axe central sur lequel est disposée la source lumineuse, et le bord distal de chaque demi projecteur est disposé en regard de l'autre bord distal, en présentant chacun des cavités de réception pour une source lumineuse commune disposée entre les deux bords distaux. Si cet agencement présente l'intérêt évident d'une optimisation des sources lumineuses, il est dans le contexte de l'invention intéressant en ce que l'on peut réaliser des lignes lumineuses de part et d'autre de la rangée des diodes électroluminescentes formant la source lumineuse en diminuant par deux le nombre de calculs nécessaires pour la forme et l'orientation des motifs.

Dans une variante non représentée, on ajoute des éléments réfléchissants sur la face de support des motifs du guide optique, qui prennent la forme de cônes simples, dont l'axe est normal à cette face de support. On augmente ainsi la diffusion de la lumière dans toutes les directions. Ces cônes peuvent être disposés en ligne parallèlement à la ligne des motifs bifonctionnels décrits précédemment, par exemple en alternance, ou bien être positionnés entre deux motifs bifonctionnels successifs d'une même ligne. Selon que l'on souhaite mettre en avant une photométrie parfaite, ou une signature visuelle forte, bien visible sur les côtés, on dispose alors plus ou moins de cône simple entre les motifs réfléchissants bifonctionnels.

## Revendications

1. Guide optique (6) de propagation d'un faisceau lumineux adapté à cheminer par réflexions totales successives sur les faces (10, 12) dudit guide jusqu'à une face de sortie (8) où le faisceau lumineux (20) est réfracté, dans lequel une des faces forme, en regard de la face de sortie, une face de support (23) d'un motif s'étendant en travers de la direction principale dudit faisceau pour dévier celui-ci vers ladite face de sortie, **caractérisé en ce que** le motif est un motif réfléchissant bifonctionnel (24,124) venu de matière avec la face de support et combinant des moyens de mise en oeuvre d'une réflexion ciblée du faisceau vers la face de sortie et des moyens de mise en oeuvre d'une réflexion multidirectionnelle dudit faisceau, ledit motif réfléchissant bifonctionnel (24,124) présentant trois parties parmi lesquelles des parties d'extrémités (26,126) formées par des portions de cône entre lesquelles est interposée une partie intermédiaire (28,128) qui comporte deux facettes (30,130) qui se rejoignent en une arête de sommet (32, 132), lesdites facettes (30,130) sont inclinées par rapport au plan horizontal d'une part par rotation d'un angle déterminé autour d'un axe parallèle à ladite face de support (23) et d'autre part par rotation d'un angle déterminé autour d'un axe perpendiculaire à ladite face de support, de telle sorte que l'arête de sommet (32,132) de la partie intermédiaire (28,128) n'est pas parallèle à ladite face de support des motifs (23).

2. Guide optique selon la revendication 1, **caractérisé en ce que** ledit motif réfléchissant bifonctionnel (24) présente trois parties parmi lesquelles des parties d'extrémités (26) formées par des portions de cône entre lesquelles est interposée une partie intermédiaire (28) à faces planes.

3. Guide optique selon la revendication 2, **caractérisé en ce que** la partie intermédiaire comporte deux facettes (30), planes et non parallèles, qui se rejoignent en une arête de sommet (32), lesdites facettes étant symétriques l'une de l'autre par rapport au plan perpendiculaire à ladite face de support des motifs (23) et passant par ladite arête de sommet.

4. Guide optique selon la revendication 1, **caractérisé en ce que** ledit motif réfléchissant bifonctionnel (124) présente trois parties parmi lesquelles des parties d'extrémités (126) formées par des portions de cône entre lesquelles est interposée une partie intermédiaire (128) à faces courbées.

5. Guide optique selon la revendication 4, **caractérisé en ce que** la partie intermédiaire comporte deux facettes (130) courbées dissymétriques, qui se rejoignent en une arête de sommet (132) courbée.

6. Guide optique selon l'une des revendications précédentes, **caractérisé en ce que** la face de support (23) comporte une pluralité de motifs bifonctionnels (24) placés les uns à côte des autres en formant une ligne selon une direction transversale à la direction principale de déplacement du faisceau lumineux dans le guide.

7. Guide optique selon la revendication 6, **caractérisé en ce que** la face de support (23) comporte plusieurs lignes de motifs bifonctionnels (24) et **caractérisé en ce que** l'ensemble des motifs est en outre disposé en quinconce.

8. Guide optique selon l'une des revendications précédentes, **caractérisé en ce que** la face de support (23) comporte en outre des motifs prenant la forme de cônes, dont l'axe est normal à ladite face de support.

9. Guide optique selon l'une des revendications précédentes, **caractérisé en ce qu'**il présente une forme de parallélépipède comportant notamment deux faces principales (10, 12) sensiblement parallèles entre elles et qui forment l'une ladite face de sortie (8) et l'autre ladite face de support (23), ainsi qu'un bord proximal (14) adapté à recevoir une source de lumière (4), de type à diode électroluminescente, qui envoie de la lumière dans l'épaisseur du guide optique, et un bord distal (16) qui présente un revêtement ou un profil géométrique permettant de renvoyer le faisceau lumineux (20) dans le guide optique.

10. Dispositif lumineux de véhicule, comprenant une glace de fermeture (2) et une source de lumière (4), ainsi qu'un guide optique (6) de propagation d'un faisceau lumineux selon l'une des revendications précédentes, dans lequel une face de sortie (8) du guide optique, lisse et continue, est disposée en regard de la glace de fermeture, et dans lequel une face de support (23) s'étend parallèlement à la face de sortie, en se distinguant de celle-ci en ce qu'elle comporte des motifs réfléchissants bifonctionnels (24,124) formant une cassure sur son profil régulier, lesdits motifs présentant trois parties parmi lesquelles des parties d'extrémités (26) formées par des portions de cône et entre lesquelles est interposée une partie intermédiaire (28,128) à faces planes ou courbées.

11. Dispositif selon la revendication 10, dans lequel la glace de fermeture (2) présente un galbe dans la direction transversale, **caractérisé en ce que** le guide optique (6) suit ce galbe et **en ce que** la face de support (23) comporte des motifs réfléchissants bifonctionnels (24,124) disposés en ligne, l'inclinaison de la partie intermédiaire (28,128) desdits motifs variant d'un motif à l'autre le long d'une même ligne.

## Patentansprüche

1. Optischer Wellenleiter (6) zur Verbreitung eines Lichtstrahls, der geeignet ist, durch aufeinanderfolgende Totalreflexionen auf den Flächen (10, 12) des Wellenleiters bis zu einer Ausgangsfläche (8), wo der Lichtstrahl (20) gebrochen wird, einen Weg zu finden, wobei eine der Flächen gegenüber der Ausgangsfläche eine Stützfläche (23) eines Musters bildet, die sich über die Hauptrichtung des Strahls erstreckt, um diesen zu der Ausgangsfläche abzulenken, **dadurch gekennzeichnet, dass** das Muster ein bifunktionelles reflektierendes Muster (24, 124) ist, das mit der Stützfläche aus einem Stück ist und Einsatzmittel einer gezielten Reflexion des Strahls zu der Ausgangsfläche und Einsatzmittel einer multidirektionalen Reflexion des Strahls kombiniert, wobei das bifunktionelle reflektierende Muster (24, 124) drei Teile aufweist, darunter Endteile (26, 126), die von Kegelabschnitten gebildet sind, zwischen denen ein Zwischenteil (28, 128) zwischengefügt ist, der zwei Facetten (30, 130) umfasst, die sich zu einer Scheitelkante (32, 132) verbinden, wobei die Facetten (30, 130) in Bezug zur Horizontalebene einerseits durch Drehung um bestimmten Winkel um eine Achse parallel zur Stützfläche (23) und andererseits durch Drehung um einen bestimmten Winkel um eine Achse senkrecht auf die Stützfläche geneigt sind, so dass die Scheitelkante (32, 132) des Zwischenteils (28, 128) nicht zur Stützfläche der Muster (23) parallel ist.

2. Optischer Wellenleiter nach Anspruch 1, **dadurch gekennzeichnet, dass** das bifunktionelle reflektierende Muster (24) drei Teile aufweist, darunter Endteile (26), die von Kegelabschnitten gebildet sind, zwischen denen ein Zwischenteil (28) mit ebenen Flächen zwischengefügt ist.

3. Optischer Wellenleiter nach Anspruch 2, **dadurch gekennzeichnet, dass** der Zwischenteil zwei ebene und nicht parallele Facetten (30) umfasst, die sich zu einer Scheitelkante (32) verbinden, wobei die Facetten zueinander in Bezug zu der Ebene senkrecht auf die Stützfläche der Muster (23) symmetrisch sind und durch die Scheitelkante verlaufen.

4. Optischer Wellenleiter nach Anspruch 1, **dadurch gekennzeichnet, dass** das bifunktionelle reflektierende Muster (124) drei Teile aufweist, darunter Endteile (126), die von Kegelabschnitten gebildet sind, zwischen denen ein Zwischenteil (128) mit gekrümmten Flächen zwischengefügt ist.

5. Optischer Wellenleiter nach Anspruch 4, **dadurch gekennzeichnet, dass** der Zwischenteil zwei asymmetrische gekrümmte Facetten (130) umfasst, die sich zu einer gekrümmten Scheitelkante (132) verbinden.

6. Optischer Wellenleiter nach einem der vorhergehenden Ansprüche, **dadurch gekennzeichnet, dass** die Stützfläche (23) eine Vielzahl von bifunktionellen Mustern (24) umfasst, die nebeneinander angeordnet sind, wobei sie eine Linie in eine Querrichtung zur Hauptbewegungsrichtung des Lichtstrahls in dem Wellenleiter bilden.

7. Optischer Wellenleiter nach Anspruch 6, **dadurch gekennzeichnet, dass** die Stützfläche (23) mehrere Linien von bifunktionellen Mustern (24) umfasst, und **dadurch gekennzeichnet, dass** die Gesamtheit der Muster ferner zickzack angeordnet ist.

8. Optischer Wellenleiter nach einem der vorhergehenden Ansprüche, **dadurch gekennzeichnet, dass** die Stützfläche (23) ferner Muster umfasst, die die Form von Kegeln, deren Achse auf die Stützfläche normal ist, annehmen.

9. Optischer Wellenleiter nach einem der vorhergehenden Ansprüche, **dadurch gekennzeichnet, dass** er eine Form eines Parallelflachs aufweist, umfassend insbesondere zwei Hauptflächen (10, 12), die im Wesentlichen zueinander parallel sind, und von denen die eine die Ausgangsfläche (8) und die andere die Stützfläche (23) bildet, sowie einen proximalen Rand (14), der eingerichtet ist, eine Lichtquelle (4) vom Typ mit Leuchtdiode aufzunehmen, die Licht in die Stärke des optischen Wellenleiters sendet, und einen distalen Rand (16), der eine Verkleidung oder ein geometrisches Profil aufweist, die/das es ermöglicht, den Lichtstrahl (20) in den optischen Wellenleiter zurückzusenden.

10. Leuchteinrichtung eines Fahrzeugs, umfassend eine Verschlussscheibe (2) und eine Lichtquelle (4) sowie einen optischen Wellenleiter (6) zur Verbreitung eines Lichtstrahls nach einem der vorhergehenden Ansprüche, wobei eine Ausgangsfläche (8) des optischen Wellenleiters, die glatt und durchgehend ist, gegenüber der Verschlussscheibe angeordnet ist, und wobei sich eine Stützfläche (23) parallel zur Ausgangsfläche erstreckt, wobei sie sich von dieser dadurch unterscheidet, dass sie bifunktionelle reflektierende Muster (24, 124) umfasst, die eine Bruchstelle auf ihrem regelmäßigen Profil bilden, wobei die Muster drei Teile aufweisen, darunter Endteile (26), die von Kegelabschnitten gebildet sind, und zwischen denen ein Zwischenteil (28, 128) mit ebenen oder gekrümmten Flächen zwischengefügt ist.

11. Einrichtung nach Anspruch 10, bei der die Verschlussscheibe (2) eine Wölbung in Querrichtung aufweist, **dadurch gekennzeichnet, dass** der optische Wellenleiter (6) dieser Wölbung folgt, und dass die Stützfläche (23) bifunktionelle reflektierende Muster (24, 124), die in einer Linie angeordnet sind, umfasst, wobei die Neigung des Zwischenteils (28, 128) der Muster von einem Muster zum anderen entlang einer selben Linie variiert.

## Claims

1. Optical waveguide (6) for the propagation of a light beam adapted to travel by successive total reflections off the faces (10, 12) of said guide to an output face (8) where the light beam (20) is refracted, in which one of the faces forms, facing towards the output face, a support face (23) for a pattern extending across the main direction of said beam to divert same towards said output face, **characterized in that** the pattern is a bifunctional reflective pattern (24,124) that is integral with the support face and combines means for the implementation of a focussed reflection of the beam towards the output face and means for the implementation of a multidirectional reflection of said beam, said bifunctional reflective pattern (24,124) having three portions including end portions (26,126) formed by cone portions between which there is interposed an intermediate portion (28,128) that comprises two facets (30,130) that meet at a top edge (32, 132), said facets (30,130) being inclined in relation to the horizontal plane on the one hand by rotation through a defined angle about an axis parallel to said support face (23) and on the other hand by rotation through a defined angle about an axis perpendicular to said support face, such that the top edge (32,132) of the intermediate portion (28,128) is not parallel to said support face for the patterns (23).

2. Optical waveguide according to Claim 1, **characterized in that** said bifunctional reflective pattern (24) has three portions including end portions (26) formed by cone portions between which there is interposed an intermediate portion (28) having plane faces.

3. Optical waveguide according to Claim 2, **characterized in that** the intermediate portion includes two facets (30), both plane and non-parallel, which meet at a top edge (32), said facets being symmetrical to one another in relation to the plane perpendicular to said support face for the patterns (23) and passing through said top edge.

4. Optical waveguide according to Claim 1, **characterized in that** said bifunctional reflective pattern (124) has three portions including end portions (126) formed by cone portions between which there is interposed an intermediate portion (128) having curved faces.

5. Optical waveguide according to Claim 4, **characterized in that** the intermediate portion includes two dissymetrical curved facets (130), which meet at a curved top edge (132).

6. Optical waveguide according to one of the preceding claims, **characterized in that** the support face (23) includes a plurality of bifunctional patterns (24) placed side by side forming a line in a transverse direction to the main direction of travel of the light beam in the guide.

7. Optical waveguide according to Claim 6, **characterized in that** the support face (23) includes several lines of bifunctional patterns (24) and is **characterized in that** the patterns as a whole are disposed in addition in a staggered fashion.

8. Optical waveguide according to one of the preceding claims, **characterized in that** the support face (23) in addition includes patterns adopting the form of cones, of which the axis is normal to said support face.

9. Optical waveguide according to one of the preceding claims, **characterized in that** it has the form of a parallelepiped including in particular two main faces (10, 12) which are substantially parallel to each other and of which one forms said output face (8) and the other said support face (23), as well as a proximal edge (14) adapted to receive a light source (4) of the light-emitting diode type, which transmits light into the thickness of the optical waveguide, and a distal edge (16) which has a coating or a geometric profile permitting the light beam (20) to be directed in the optical waveguide.

10. Lighting device for a motor vehicle, comprising a cover lens (2) and a light source (4), as well as an optical waveguide (6) for the propagation of a light beam according to one of the preceding claims, in which an output face (8) of the optical waveguide, being smooth and continuous, is disposed facing towards the cover lens, and in which a support face (23) extends parallel to the output face, although it differs from the latter in that it includes bifunctional reflective patterns (24,124) forming an interruption in its regular profile, said patterns having three portions including end portions (26) formed by cone portions and between which there is interposed an intermediate portion (28,128) having plane or curved faces.

11. Device according to Claim 10, in which the cover lens (2) has a curvature in the transverse direction, **characterized in that** the optical waveguide (6) follows this curvature and **in that** the support face (23) includes bifunctional reflective patterns (24,124) disposed in a line, the inclination of the intermediate portion (28,128) of said patterns varying from one pattern to the other along one and the same line.
